# EUROPEAN PATENT APPLICATION

(11) **EP 2 626 556 A1**
(43) Date of publication of application: **14.08.2013**
(21) Application number: 12154225.2
(22) Date of filing: 07.02.2012
(51) Int. Cl.: F03D 11/00, G01N 33/00

(54) **Wind turbine**

(71) Applicant: Siemens Aktiengesellschaft, 80333 München (DE)
(72) Inventor: Kölpin, Helmut, Dr., 52499 Baesweiler (DE); Brasseur, Michaela, 52072 Aachen (DE); Hohle, Andreas Christian, Dr., 52477 Alsdorf (DE); Tchemtchoua, Brice, Dr., 4850 Montzen (BE)

(57) **Abstract**

Wind turbine (1), comprising a number of components, wherein at least one hydrogen determining means (11) adapted to generate at least one component-specific hydrogen information indicating a degree of the content of hydrogen and/or at least one chemical compound comprising hydrogen within at least one respective component of the wind turbine (1).

## Description

The invention relates to a wind turbine, comprising a number of components.

It is known that damages of components of wind turbines, such as particularly mechanical components of wind turbines like bearing components and/or components of the drive train of wind turbines, may be based on the incorporation of hydrogen into the respective components or the generation of hydrogen in the respective components during operation.

Especially, when regarding metal-based components it is known that certain contents of hydrogen usually lead to a decrease of the mechanical properties of the respective components, which phenomenon is oftentimes denoted as hydrogen embrittlement. Hydrogen embrittlement causes metals, particularly iron-based metals, to become brittle and fracturable.

Hence, it is the object of the invention to provide an improved wind turbine allowing determining the hydrogen content of at least one respective component.

This is inventively achieved by a wind turbine as initially described, wherein at least one hydrogen determining means adapted to generate at least one component-specific hydrogen information indicating a degree of the content of hydrogen and/or at least one chemical compound comprising hydrogen within at least one respective component of the wind turbine.

The inventive principle allows qualitatively or quantitatively determining the content, amount, or concentration of hydrogen and/or respective chemical compounds comprising or including hydrogen, such as particularly water or other inorganic or organic chemical compounds, etc. within at least one component of the wind turbine by use of at least one respective hydrogen determining means. Thereby, the hydrogen determining means is adapted to determine or generate at least one hydrogen information, which hydrogen information indicates a degree of the content of hydrogen and/or at least one chemical compound comprising hydrogen within at least one respective component of the wind turbine. The hydrogen information is component-specific, i.e. the content of hydrogen or a respective chemical compound comprising hydrogen may be determined for each respective component of the wind turbine in individual manner.

Hence, the hydrogen information may be understood as an information qualitatively or quantitatively indicating the content of hydrogen or at least one respective chemical compound comprising hydrogen of at least one specific component, at least one specific group of components, or all respective components of the wind turbine. I.e., the hydrogen information is component-specific in that it may separately or collectively indicate hydrogen relevant information of the respective components of the wind turbine in individual, group-wise, or collective manner. A respective hydrogen information may comprise all kinds of parameters or quantities allowing a direct or indirect determination of the content of hydrogen and/or at least one chemical compound comprising or including hydrogen of at least one respective component of the wind turbine.

Preferably, respective mechanical components of the wind turbine such as bearing components and/or components of the drive train of the wind turbine, particularly rotatable or rotating components of a gear box and/or a rotatable or rotating drive shaft, may be provided with a respective hydrogen determining means.

A respective hydrogen determining means may comprise at least one hydrogen sensor element adapted to determine the content of hydrogen and/or at least one chemical compound comprising hydrogen within a respective component of the wind turbine. A respective sensor element may comprise a number of sensors distributed within or along the outer circumference of a respective component.

A respective hydrogen determining means may be disposed on the outer surface of a respective component of the wind turbine and/or inside a respective component of the wind turbine, particularly in a recess of the respective component. Hence, aside to the possibility to attach a respective hydrogen determining means to the outer surface of a respective component, it is also possible to integrate a respective hydrogen determining means in a respective component by moulding or the like, which may allow a more direct determination of the content of hydrogen and/or respective chemical compounds comprising hydrogen in a respective component as well as a certain mechanical protection of the hydrogen determining means. Further, respective receiving portions such as particularly recesses, bores, or the like may be provided with the respective components for securely receiving at least one respective hydrogen determining means.

The arrangement of respective hydrogen determining means or the connection of respective hydrogen determining means with respective components of the wind turbine may be non-detachable, i.e. stationary or detachable, so that a certain hydrogen determining means may be used for different, mutually separately disposed components of the wind turbine.

According to a further embodiment, a wind turbine control unit is provided, whereby the wind turbine control unit is adapted to control at least one operational parameter of the wind turbine under consideration of the at least one hydrogen information. The control unit, which may be a central wind turbine controller, is adapted to communicate with the respective hydrogen determining means in order to obtain the hydrogen information. On basis of the hydrogen information, respective operational parameters are controlled or adjusted. Respective operational parameters of the wind turbine may be power output and/or rotational speed of the main shaft and/or the rotor hub for instance.

The control unit may be adapted to consider at least one component-specific hydrogen content threshold value indicating a degree of the maximum allowable content of hydrogen and/or chemical compounds comprising hydrogen of a respective component of the wind turbine for controlling at least one operational parameter of the wind turbine. Hence, if a respective hydrogen information indicates that a respective component-specific content of hydrogen and/or at least one chemical compound comprising hydrogen exceeds or falls below a respective hydrogen content threshold value, at least one respective operational parameter of the wind turbine may be accordingly adjusted or changed so that operation of the respective component and possibly the entire wind turbine may be limited or even stopped in order to avoid the danger of damage of the respective component or further components of the wind turbine. For example, power output of the generator or rotational speed of a rotating or rotatable component such as the rotor hub for instance may be appropriately decreased in this case.

It is additionally or alternatively also thinkable that the control unit may be adapted to generate and emit at least one alarm signal under consideration of the at least one component-specific hydrogen content threshold value indicating a degree of the maximum allowable content of hydrogen and/or chemical compounds comprising hydrogen of a respective component of the wind turbine. Hence, particularly when a respective hydrogen information indicates that a respective component-specific content of hydrogen and/or at least one chemical compound comprising hydrogen exceeds or falls below a respective hydrogen content threshold value a respective alarm signal may generated and emitted. The alarm signal may be emitted without changing of respective operational parameters of the wind turbine, if need be. The alarm signal may be transmitted to a control station via any appropriate communications network.

It is also possible that a control unit is provided, whereby the control unit is adapted to derive hydrogen flux information indicating a degree of the flux of hydrogen and/or at least one chemical compound comprising hydrogen into the respective component from the hydrogen information. Hydrogen flux, i.e. the amount of hydrogen and/or respective chemical compounds comprising hydrogen being absorbed and/or adsorbed by respective components of the wind turbine for a given time interval, may also be a decisive parameter for determining a respective hydrogen information. Hence, the determination of a respective hydrogen flux information allows a more exact representation of the content of hydrogen and/or respective chemical compounds comprising hydrogen of respective components of the wind turbine.

Thereby, it is of advantage when the control unit is adapted to control at least one operational parameter of the wind turbine under consideration of the at least one hydrogen flux information. Hence, at least one respective operational parameter of a respective component of the wind turbine may be accordingly adjusted or changed so that operation of the respective component and possibly the entire wind turbine may be limited or even stopped in order to avoid the danger of damage of the respective component or further components of the wind turbine. Again, respective operational parameters of the wind turbine may be power output and/or rotational speed of the main shaft and/or the rotor hub for instance.

The or a respective provided control unit(s) may be adapted to determine respective threshold values of operational parameters of the wind turbine under consideration of the hydrogen information, and/or if need be the hydrogen flux information, and ambient climatic information. Hence, respective threshold values of operational parameters of respective components of the wind turbine such as a maximum allowable rotational speed of the rotor hub or main shaft for instance may be appropriately and individually adjusted in dependency of determined component-specific hydrogen information and/or hydrogen flux information, if need be. Hence, real time adjusting and/or adapting of respective threshold values of operational parameters is possible allowing improved operation of the entire wind turbine.

Thereby, the ambient climatic information preferably indicates current or prospective climatic parameters, particularly wind speed and/or air humidity and/or air density and/or air pressure and/or temperature. Hence, current or prospective climatic conditions may be considered for adjusting respective threshold values of operational parameters of the wind turbine or respective components of the wind turbine. Generally, all kinds of parameters relating to respective current or prospective climatic conditions may be considered, whereby respective climatic information may be determined at site or be submitted in terms of climatic or weather forecast information through an appropriate communication network such as the World Wide Web or the like.

According to a further embodiment of the invention, at least one respective component is provided with a drying means, particularly comprising at least one fan and/or at least one heater, whereby the drying means is adapted to be operated by a control unit under consideration of the at least one hydrogen information. The drying means may be actuated when the hydrogen information indicates a content of hydrogen and/or a respective chemical compound comprising hydrogen of a respective component which content of hydrogen and/or a respective chemical compound comprising hydrogen exceeding a respective component-specific hydrogen related threshold value. Operation of the drying means may be stopped or decreased, when the hydrogen information indicates that the content of hydrogen and/or a respective chemical compound comprising hydrogen of the respective component has decreased below the respective threshold value.

The aforementioned control units or a certain number of the aforementioned control units may be incorporated or combined in a common or central unit of the wind turbine.

According to a further embodiment of the invention, a storage medium is provided, with the storage medium being adapted to store determined respective hydrogen information. The storage medium may also store respective, particularly component-specific, threshold values concerning component-specific maximum allowable contents of hydrogen and/or respective chemical compounds comprising hydrogen. Thus, historic hydrogen information is available and may be used for comparison with current hydrogen information such as particularly for evaluation purposes or the like.

Aside, the invention relates to a method for determining the content of hydrogen and/or the content of at least one chemical compound comprising hydrogen of at least one component of a wind turbine, particularly the wind turbine as described before. Thereby, at least one component-specific hydrogen information indicating a degree of the content of hydrogen and/or at least one chemical compound comprising hydrogen within at least one respective component of the wind turbine is determined, whereby at least one operational parameter of the wind turbine is controlled under consideration of the at least one hydrogen information.

The hydrogen information may be generated in continuous or discontinuous manner. Hence, a respective hydrogen information may be generated permanently or at given time intervals such as every 10 seconds, 10 minutes, for instance. The time intervals may be individually defined by a user.

It is possible that at least one hydrogen flux information indicating a degree of the flux of hydrogen and/or at least one chemical compound comprising hydrogen into a respective component of the wind turbine is determined or derived from the hydrogen information. In such a manner, a more exact and extensive representation of the component-specific content of hydrogen and/or respective chemical compounds comprising hydrogen may be determined.

Furthermore, respective threshold values of operational parameters of the wind turbine may be determined under consideration of the hydrogen information, and/or if need be the hydrogen flux information, and ambient climatic information.

Generally, all annotations concerning the inventive wind turbine also apply to the inventive method.

In the following, the invention is described in detail, whereby reference is made to the principle drawings, whereby:
- fig. 1: shows a principle drawing of a wind turbine according to an exemplary embodiment of the invention; and
- fig. 2: shows a principle drawing of a hydrogen determining means and a respective component of the wind turbine according to fig. 1.

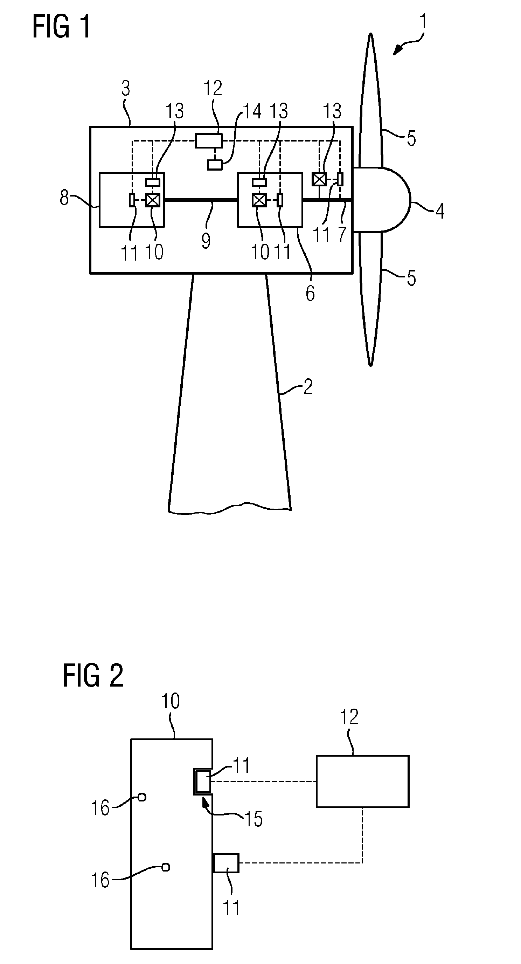

Fig. 1 shows a principle drawing of a wind turbine 1 according to an exemplary embodiment of the invention. The wind turbine 1 comprises a number of components, whereby only essential components of the wind turbine 1 such as a tower construction 2 holding a nacelle 3, a rotor hub 4 having a number of rotor blades 5 attached, thereto, a gear box 6 being mechanically connected directly to the rotor hub 4 by means of a main shaft 7, and a generator 8 being mechanically connected to the gear box 6 by means of a second shaft 9 are depicted. Further, bearing components 10 such as roller bearings or plain bearings are provided with diverse components of the wind turbine 1 such as the main shaft 7, the gear box 6, and the generator 8, for instance. In the case of a direct-drive wind turbine, either the main shaft 7 or the rotor hub 4 would be directly mechanically coupled with the generator 8 without the need of a gear box 6.

According to the inventive principle, a number of hydrogen determining means 11 are provided. Each hydrogen determining means 11 is adapted to generate at least one component-specific hydrogen information indicating a degree of the content of hydrogen and/or at least one chemical compound comprising hydrogen within at least one respective component of the wind turbine. The hydrogen determining means 11 may comprise at least one hydrogen sensor element (not explicitly shown) adapted to determine the content of hydrogen and/or at least one chemical compound comprising hydrogen within a respective component of the wind turbine 1.

According to the exemplary embodiment of fig. 1, respective hydrogen determining means 11 are particularly provided with rotatable or rotating components of the wind turbine 1, i.e. the main shaft 7 as well as a bearing component 10 associated with the main shaft 7, the gear box 6 as well as the bearing component 10 associated with the gear box 6, and the generator 8 as well as the bearing component 10 associated with the generator 8.

Further, a (wind turbine) control unit 12 is provided. The control unit 12 is adapted to control at least one operational parameter of the wind turbine 1 under consideration of the at least one hydrogen information. Thereby, the control unit 12 is adapted to consider at least one component-specific hydrogen content threshold value indicating a degree of the minimum or maximum allowable content of hydrogen and/or chemical compounds comprising hydrogen of a respective component of the wind turbine 1 for controlling at least one operational parameter of the wind turbine. A respective operational parameter of the wind turbine may be power output of the generator 8 and/or rotational speed of the main shaft 7 and/or the rotor hub 4 for instance.

Aside, the control unit 12 is adapted to determine or derive hydrogen flux information indicating a degree of the flux of hydrogen and/or at least one chemical compound comprising hydrogen into the respective component of the wind turbine 1 from the hydrogen information. In such a manner, the control unit 12 is further adapted to control at least one operational parameter of the wind turbine 1 under consideration of the at least one hydrogen flux information. Hence, both the hydrogen information and the hydrogen flux information may serve as a basis for controlling and/or adjusting respective operational parameters of the wind turbine 1. Exemplary operational parameters of the wind turbine 1 may be the power output of the generator 1, the rotational speed of the rotor hub 4 or the main shaft 5 for instance.

The control unit 12 may also determine respective threshold values of operational parameters of the wind turbine 1 under consideration of the hydrogen information, and/or if need be the hydrogen flux information, and ambient climatic information. Thereby, ambient climatic information may refer to current or prospective climatic parameters, particularly wind speed and/or air humidity and/or air density and/or air pressure and/or temperature. Respective climatic information may be determined at site, i.e. the wind turbine 1 comprises respective sensor elements adapted to determine respective ambient conditions and/or climatic parameters. It is also possible that respective climatic information may be submitted by an appropriate communication network (not explicitly shown). The communication network may submit information contents concerning weather forecast or the like.

Furthermore, a number of drying means 13, particularly comprising at least one fan and/or at least one heater, are provided with respective components of the wind turbine 1. Thereby, operation of the drying means 13 is controlled by the control unit 12 under consideration of the at least one hydrogen information and/or the hydrogen flux information. The drying means 13 are particularly actuated when a respective component-specific hydrogen information and/or hydrogen flux information exceeds a respective component-specific threshold value, i.e. when a respective hydrogen information indicates that the content, amount, or concentration of hydrogen exceeds a component-specific hydrogen threshold value.

The control unit 12 further communicates with or comprises a storage medium 14 so that historic hydrogen information may be stored and used for evaluation purposes, for instance.

The inventive wind turbine 1 is adapted to perform the inventive method. According to the inventive method for determining the content of hydrogen and/or the content of at least one chemical compound comprising hydrogen of at least one component of a wind turbine 1 at least one component-specific hydrogen information indicating a degree of the content of hydrogen and/or at least one chemical compound comprising hydrogen within at least one respective component of the wind turbine 1 is determined, whereby at least one operational parameter of the wind turbine 1 is controlled under consideration of the at least one hydrogen information.

It is also possible to determine respective hydrogen flux information as mentioned above. Respective hydrogen flux information may also be considered for controlling respective operational parameters of the wind turbine 1, i.e. for controlling operation of the wind turbine 1.

Both hydrogen information and hydrogen flux information may be determined in continuous or discontinuous manner.

Fig. 2 shows a principle drawing of a hydrogen determining means 11 and a respective component of the wind turbine according to fig. 1, i.e. a bearing component 10 for instance. A respective hydrogen source is denoted as 16.

It is discernible that a respective hydrogen determining means 11 may be disposed on the outer surface of the bearing component 10. Further, another hydrogen determining means 11 may be disposed inside the bearing component 10, particularly in a receiving portion such as the recess 15 such as a bore or the like of the bearing component 10. Even though not explicitly shown in fig. 2, a respective hydrogen determining means 11 may also be completely integrated in a respective component of the wind turbine 1.

In either case, the hydrogen determining means 11 are connected or communicate with a control unit, i.e. particularly the control unit 12, which control unit collects respective hydrogen information from the hydrogen determining means 11. It is thinkable that at least the respective hydrogen determining means 11 being disposed on the outer surface of the respective component of the wind turbine 1 may be detachable from the respective component. I.e. a single hydrogen determining means 11 may be a portable device which may be utilised for determining respective hydrogen information for different respective components of the wind turbine 1, i.e. at different locations within the wind turbine 1.

Although the present invention has been described in detail with reference to the preferred embodiment, the present invention is not limited by the disclosed examples from which the skilled person is able to derive other variations without departing from the scope of the invention.

## Claims

1. Wind turbine (1), comprising a number of components, **characterised in** at least one hydrogen determining means (11) adapted to generate at least one component-specific hydrogen information indicating a degree of the content of hydrogen and/or at least one chemical compound comprising hydrogen within at least one respective component of the wind turbine (1) .

2. Wind turbine according to claim 1, wherein a respective hydrogen determining means (11) is disposed on the outer surface of a respective component of the wind turbine (1) and/or inside a respective component of the wind turbine (1), particularly in a recess (15) of the respective component.

3. Wind turbine according to claim 1 or 2, wherein a wind turbine control unit (12) is provided, whereby the wind turbine control unit (12) is adapted to control at least one operational parameter of the wind turbine (1) under consideration of the at least one hydrogen information.

4. Wind turbine according to claim 3, wherein the control unit (12) is adapted to consider at least one component-specific hydrogen content threshold value indicating a degree of the maximum allowable content of hydrogen and/or chemical compounds comprising hydrogen of a respective component of the wind turbine (1) for controlling at least one operational parameter of the wind turbine (1).

5. Wind turbine according to one of the preceding claims, wherein a control unit (12) is provided, whereby the control unit (12) is adapted to derive hydrogen flux information indicating a degree of the flux of hydrogen and/or at least one chemical compound comprising hydrogen into the respective component from the hydrogen information.

6. Wind turbine according to claim 5, wherein the control unit (12) is adapted to control at least one operational parameter of the wind turbine (1) under consideration of the at least one hydrogen flux information.

7. Wind turbine according to one of the preceding claims, wherein a control unit (12) is provided, whereby the control unit (12) is adapted to determine respective threshold values of operational parameters of the wind turbine (1) under consideration of the hydrogen information, and/or if need be the hydrogen flux information, and ambient climatic information.

8. Wind turbine according to claim 7, wherein the ambient climatic information indicates current or prospective climatic parameters, particularly wind speed and/or air humidity and/or air density and/or air pressure and/or temperature.

9. Wind turbine according to one of the preceding claims, wherein the hydrogen determining means (11) comprises at least one hydrogen sensor element adapted to determine the content of hydrogen and/or at least one chemical compound comprising hydrogen within a respective component of the wind turbine (1).

10. Wind turbine according to one of the preceding claims, wherein at least one respective component is provided with a drying means (13), particularly comprising at least one fan and/or at least one heater, whereby the drying means (13) is adapted to be operated by a control unit (12) under consideration of the at least one hydrogen information.

11. Wind turbine according to one of the preceding claims, wherein a storage medium (14) is provided, with the storage medium (14) being adapted to store determined hydrogen information.

12. Method for determining the content of hydrogen and/or the content of at least one chemical compound comprising hydrogen of at least one component of a wind turbine (1), particularly the wind turbine (1) according to one of the preceding claims, whereby at least one component-specific hydrogen information indicating a degree of the content of hydrogen and/or at least one chemical compound comprising hydrogen within at least one respective component of the wind turbine (1) is determined, whereby at least one operational parameter of the wind turbine (1) is controlled under consideration of the at least one hydrogen information.

13. Method according to claim 12, wherein the hydrogen information is determined in continuous or discontinuous manner.

14. Method according to one of the claims 12 or 13, wherein at least one hydrogen flux information indicating a degree of the flux of hydrogen and/or at least one chemical compound comprising hydrogen into a respective component of the wind turbine (1) is derived from the hydrogen information.

15. Method according to one of the claims 12 to 14, wherein respective threshold values of operational parameters of the wind turbine (1) are determined under consideration of the hydrogen information, and/or if need be the hydrogen flux information, and ambient climatic information.
